# EUROPEAN PATENT APPLICATION

(11) **EP 1 727 346 A2**
(43) Date of publication of application: **29.11.2006**
(21) Application number: 06252552.2
(22) Date of filing: 16.05.2006
(51) Int. Cl.: H04N 1/00

(54) **Apparatus and method for image registration**

(30) Priority: 23.05.2005 KR 20050043211
(71) Applicant: Samsung Electronics Co., Ltd., Suwon-si, Gyeonggi-Do (KR)
(72) Inventor: Kim, Soo-yong, Seoul (KR); Jeong, Heung-sup, Suwon-si, Gyeonggi-do (KR); Lyu, Se-hyun, Seoul (KR)
(74) Representative: Clark, David James

(57) **Abstract**

An image registration apparatus and method are provided. The image alignment registration apparatus includes a plurality of exposing units (130-150) which form electrostatic latent images by scanning light; a sensing unit (100) which senses color test patterns to correct image alignment; an error detecting unit (110) which detects alignment errors of test patterns in response to a sensing result of the sensing unit (100); and an exposure time setting unit (120) which determines the exposure time required to form an electrostatic latent image in each of the exposing units (130-150) in response to errors detected by the error detecting unit (110), wherein each of the exposing units (130-150) form the electrostatic latent image according to the exposure time determined by the exposure time setting unit (120). Accordingly, by controlling the exposure time for forming images in a tandem type image forming apparatus, image alignment errors are corrected.

## Description

The present invention relates to image registration. More particularly, the present invention relates to image registration apparatus and methods.

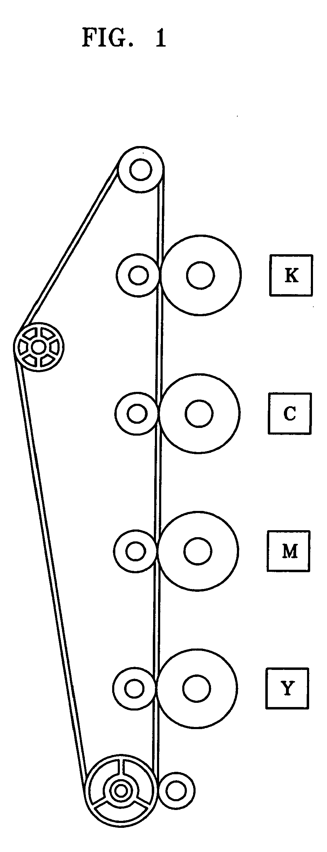

A structure of a conventional image forming apparatus includes a plurality of photosensitive drums, developing units, and a transfer belt as shown in FIG. 1. An image forming apparatus including photosensitive drums and developing units for different ink colors to form an image through a single pass, as shown in FIG. 1, is referred to as a tandem type image forming apparatus. In the tandem type image forming apparatus, image forming starting points of black, cyan, magenta, and yellow must be aligned to obtain good quality images. This is difficult to achieve because the image forming starting points may be misaligned when the image forming apparatus is manufactured or the image forming starting points may drift out of alignment after long periods of use. Accordingly, an image registration method is needed to correct such alignment errors.

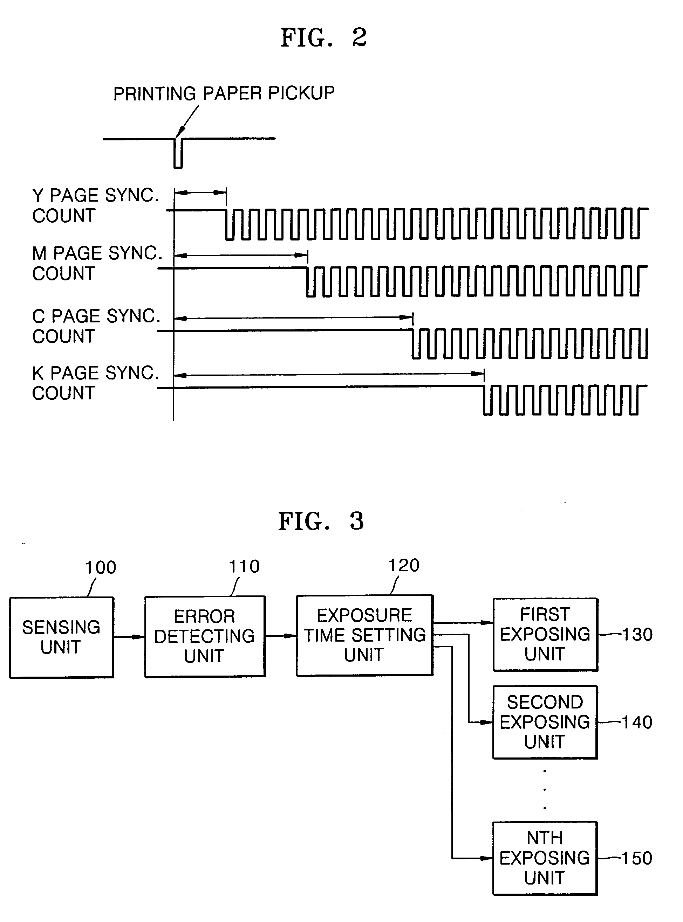

FIG. 2 is a timing diagram illustrating image forming times when printing papers are fed to the photosensitive drums and developing units as shown in FIG. 1. In a conventional image alignment registration method, a printing paper edge sensing scheme has been used. FIG. 2 is an example of this type of scheme. As shown in FIG.2, a printing paper pickup signal is used as a reference signal. Image forming starting points are determined using the printing paper pickup signal. An image is formed on the printing paper according to the image forming starting points while the printing paper is moved toward the photosensitive drums and developing units. Preferably, the printing paper must be moved to the developing units by the transfer belt at a constant speed.

However, the speed at which the printing paper is fed to the developing units varies according to various conditions. Even though a printing paper edge is synchronized, can vary in the speed at which printing paper is fed causes limitations in improving the quality of color registration. This results in the deterioration of the quality of printed images.

It is an aim of preferred embodiments of the present invention to address one or more problems associated with the prior art, whether identified herein, or otherwise.

According to an aspect of of the present invention, an image registration apparatus is provided, comprising a plurality of exposing units operable to form electrostatic latent images by scanning light; a sensing unit operable to sense color test patterns to correct image alignment and an error detecting unit detects alignment errors of test patterns in response to a sensing result of the sensing unit; and an exposure time setting unit operable to determine the exposure time required to form an electrostatic latent image in each of the exposing units in response to errors detected by the error detecting unit, wherein each of the exposing units form the electrostatic latent image according to the exposure time determined by the exposure time setting unit.

According to another aspect of an exemplary embodiment of the present invention, an image registration method is provided, comprising sensing color test patterns to correct image alignment; detecting errors of the color test patterns in response to a sensing result; the exposure time required to form an electrostatic latent image in response to the detected alignment error of each of the color test patterns; and forming the electrostatic latent image according to the determined exposure times.

According to the present invention there is provided an apparatus and method as set forth in the appended claims. Preferred features of the invention will be apparent from the dependent claims, and the description which follows.

In this way, exemplary embodiments of the present invention may provide an image registration apparatus and methods for correcting image alignment errors by controlling exposure times for forming images in an image forming apparatus.

For a better understanding of the invention, and to show how embodiments of the same may be carried into effect, reference will now be made, by way of example, to the accompanying diagrammatic drawings in which:
FIG. 1 is a view illustrating the detailed structure of photosensitive drums, developing units, and a transfer belt of a conventional image forming apparatus;
FIG. 2 is a timing diagram illustrating image forming times at which printing papers are fed to the photosensitive drums and developing units shown in FIG. 1;
FIG. 3 is a functional block diagram of an image alignment registration apparatus according to an exemplary embodiment of the present invention;
FIG. 4 is a view illustrating image alignment errors which increase over time;
FIG. 5 is a timing diagram illustrating the image alignment errors shown in FIG. 4; and
FIG. 6 is a flowchart illustrating an image alignment registration method according to an exemplary embodiment of the present invention.

An image registration apparatus according to a preferred embodiment of the present invention will now be described in detail with reference to the accompanying drawings.

FIG. 3 is a functional block diagram of the image registration apparatus according to an exemplary embodiment of the present invention. The image registration apparatus, according to an exemplary embodiment of the present invention, includes a sensing unit 100, an error detecting unit 110, an exposure time setting unit 120, and first through nth exposing units 130, 140, ..., and 150, respectively.

The sensing unit 100 senses color test patterns to correct image alignment, and includes a light emitting unit (not shown) and a light receiving unit (not shown).

The light emitting unit includes a light emitting diode (LED) to emit light. The light receiving unit includes photodiodes to receive the light emitted by the light emitting unit and reflected from the test patterns and to convert the light into electrical signals.

In response to a sensing result of the sensing unit 100, the error detecting unit 110 detects alignment errors of test patterns and outputs a detection result to the exposure time setting unit 120.

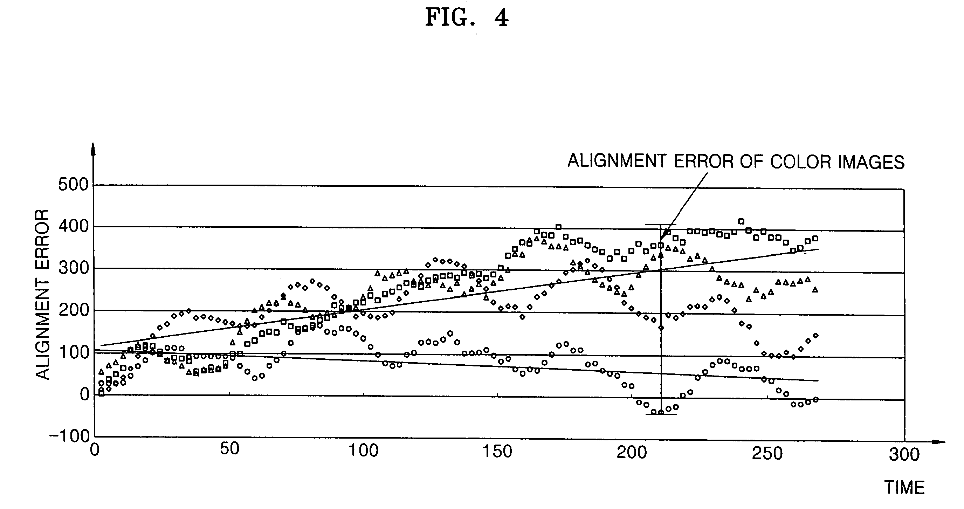

FIG. 4 is a graph of image alignment error versus time, in which the image alignment error increases with time. As shown in FIG. 4, changes in the speed at which a printing paper is fed cause the quality of a printed image to deteriorate. Even though a printing paper edge is synchronized, the quality of the printed image deteriorates, resulting in a more serious problem as the time passes.

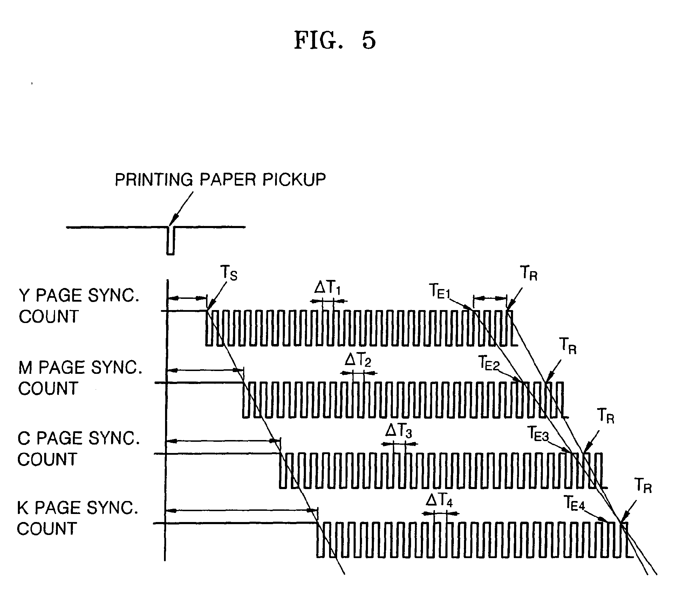

FIG. 5 is a timing diagram of the image alignment errors shown in FIG. 4. As shown in FIG. 5, the image alignment errors become significant when images are formed in a certain area (for example, on the same page).

The error detecting unit 110 detects the image alignment errors of test patterns shown in FIGS. 4 and 5. The image alignment errors of test patterns are shown with respect to time values, which can be converted into distance values by the error detecting unit 110. The error detecting unit 110 detects the alignment error TR-TE1 of a yellow test pattern, the alignment error TR-TE2 of a magenta test pattern, and the alignment error TR-TE3 of a cyan test pattern.

In response to the image alignment errors detected by the error detecting unit 110, the exposure time setting unit 120 determines the exposure times for forming electrostatic latent images in the first though nth exposing units 130, 140, ..., and 150, respectively. The exposure time setting unit 120 outputs the determination result to the first through nth exposing units 130, 140, ..., and 150, respectively.

The exposure time setting unit 120 determines the exposure times based on times for forming the electrostatic latent images for respective lines in the first though nth exposing units 130, 140, ..., and 150, respectively. In FIG. 5, the image forming times of yellow, magenta, and cyan test patterns are shorter than the image forming time of a black test pattern, when the image forming time of a black test pattern is a reference time. Such image forming time differences may cause the image alignment errors. Therefore, the exposure time setting unit 120 controls the exposure times to correct the image forming time differences.

For example, when an image alignment error of a yellow test pattern on a page is denoted by TR-TE1, the exposure time setting unit 120 divides the image alignment error TR-TEI by the total number of lines on the page, and adds the result to the exposure time of the yellow test pattern ΔT1 to determine a new exposure time for forming the electrostatic latent images. The exposure time setting unit 120 determines the calculation time as a new exposure time of the yellow test pattern.

When an image alignment error of a magenta test pattern on a page is denoted by TR-TE2, the exposure time setting unit 120 divides the image alignment error TR-TE2 by the total number of lines on the page, and adds the result to the exposure time of the magenta test pattern ΔT2 to determine a new exposure time for forming the electrostatic latent images. The exposure time setting unit 120 determines the calculation time as a new exposure time of the magenta test pattern.

Also, when an image alignment error of a cyan test pattern on a page is denoted by TR-TE3, the exposure time setting unit 120 divides the image alignment error TR-TE3 by the total number of lines on the page, and adds the result to the exposure time of the cyan test pattern ΔT3 to determine a new exposure time for forming the electrostatic latent images. The exposure time setting unit 120 determines the calculation time as a new exposure time of the cyan test pattern.

Alternatively, or in addition the exposure time setting unit 120 determines the exposure times based on error slopes corresponding to the image alignment errors of the test patterns. In FIG. 5, the image forming staring points of the yellow, magenta, cyan, and black test patterns are denoted by Tₛ and the actual yellow, magenta, cyan, and black test patterns are denoted by T_{E1}, T_{E2}, T_{E3}, and T_{E4}, respectively. The exposure time setting unit 120 then determines the exposure times so that the error slope, which corresponds to the slope of a line connecting T_{E1}, T_{E2}, T_{E3}, and T_{E4}, is equal to the slope of a line connecting the image forming staring points Ts of the yellow, magenta, cyan, and black test patterns.

The first through nth exposing units 130, 140, ..., and 150, respectively, form the electrostatic latent images by scanning the photosensitive drums (not shown) according to the exposure times determined by the exposure time setting unit 120.

The first through nth exposing units 130, 140, ..., and 150, respectively, form the electrostatic latent images by changing the rotational speeds of polygon mirrors in the exposing units 130, 140, ..., and 150, respectively, according to the determined exposure times.

The image alignment errors, which occur at the time of image forming, can be minimized when the first through nth exposing units 130, 140, ..., and 150 use the times determined by the exposure time setting unit 120.

An image registration method, according to an exemplary embodiment of the present invention, will now be described in detail with reference to the accompanying drawings.

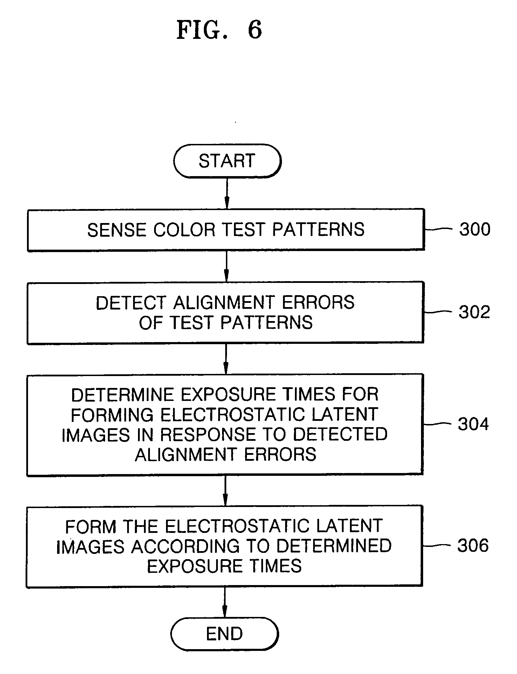

FIG. 6 is a flowchart illustrating an image registration method according to an exemplary embodiment of the present invention.

First, color test patterns are sensed to correct image alignment (operation 300).

After operation 300, image alignment errors of the color test patterns are detected according to the sensing result (operation 302). As shown in FIGS. 4 and 5, the alignment error T_{R}-T_{E1} of the yellow test pattern, the alignment error T_{R}-T_{E2} of the magenta test pattern, and the alignment error T_{R}-T_{E3} of the cyan test pattern are detected.

After operation 302, the exposure times for forming the electrostatic latent images are determined in response to the detected alignment errors (operation 304). The time required to form an electrostatic latent image for each of the test patterns is determined as exposure time.

For example, when an image alignment error of a yellow test pattern on a page is denoted by T_{R}-T_{E1}, the image alignment error T_{R}-T_{E1} is divided by the total number of lines on the page. The division result is added to the exposure time of the yellow test pattern ΔT₁ to determine a new exposure time for forming the electrostatic latent images for respective lines. The calculation result is determined as a new exposure time of the yellow test pattern.

When an image alignment error of a magenta test pattern on a page is denoted by T_{R-}T_{E2}, the image alignment error T_{R}-T_{E2} is divided by the total number of lines on the page. The division result is added to the exposure time of the magenta test pattern ΔT₂ to determine a new exposure time for forming the electrostatic latent images for respective lines. The calculation result is determined as a new exposure time of the magenta test pattern.

Also, when an image alignment error of a cyan test pattern on a page is denoted by T_{R}-T_{E3}, the image alignment error T_{R}-T_{E3} is divided by the total number of lines on the page. The division result is added to the exposure time of the cyan test pattern ΔT₃ to determine a new exposure time for forming the electrostatic latent images for respective lines. The calculation result is determined as a new exposure time of the cyan test pattern.

The exposure times are determined based on error slopes corresponding to the image alignment errors of the test patterns. Referring to FIG. 5, the image forming staring points of the yellow, magenta, cyan, and black test patterns are denoted by Tₛ and the actual yellow, magenta, cyan, and black test patterns are denoted by T_{E1}, T_{E2}, T_{E3}, and T_{E4}, respectively. The exposure times are then determined so that the error slope, which corresponds to the slope of a line connecting T_{E1}, T_{E2}, T_{E3}, and T_{E4}, is equal to the slope of a line connecting the image forming staring points Tₛ of the yellow, magenta, cyan, and black test patterns.

After operation 304, the electrostatic latent images are formed by scanning photosensitive drums (not shown) according to the determined exposure times (operation 306).

The electrostatic latent images are formed while changing the rotational speeds of the polygon mirrors in accordance with the determined exposure times.

An image registration apparatus and method, according to an exemplary embodiment of the present invention, can correct image alignment errors by controlling exposure times for forming images in a tandem type image forming apparatus. Therefore, color image registration errors due to changes in the speed at which printing paper is fed can be effectively reduced.

The exemplary embodiments of the present invention can be written as computer readable code, instructions, or programs and can be implemented in general-use digital computers that execute the programs using a computer readable recording medium. Examples of the computer readable recording medium include magnetic storage media (such as ROM, floppy disks, hard disks, and magnetic tapes, among others), optical recording media (such as CD-ROMs, or DVDs), and storage media such as carrier waves (for example, transmission through the Internet). Further, the computer readable recording medium can also be distributed over network coupled computer systems so that the computer readable code is stored and executed in a distributed fashion. Also, functional programs, code, and code segments for accomplishing exemplary embodiments of the present invention can be easily construed by programmers skilled in the art to which the present invention pertains.

While the present invention has been shown and described with reference to certain exemplary embodiments thereof, it will be understood by those skilled in the art that various changes in form and details may be made therein without departing from the scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image registration apparatus comprising:
a plurality of exposing units (130-150) for forming electrostatic latent images by scanning light;
a sensing unit (100) for sensing color test patterns to correct image alignment;
an error detecting unit (110) for detecting alignment errors of test patterns in response to a sensing result of the sensing unit; and
an exposure time setting unit (120) for determining the exposure time required to form an electrostatic latent image in each of the exposing units (130-150) in response to errors detected by the error detecting unit, wherein each of the exposing unit (130-150) forms the electrostatic latent image according to the exposure time determined by the exposure time setting unit (120).

2. The image registration apparatus according to claim 1, wherein the exposure time setting unit (120) determines the time required to form the electrostatic latent image of a line as the exposure time.

3. The image registration apparatus according to claim 1 or 2, wherein the exposure time setting unit (120) determines the exposure time based on an error slope corresponding to an image alignment error of each of the color test patterns.

4. The image registration apparatus according to claim 1, wherein each of the exposing units forms the electrostatic latent image while changing the rotational speed of a polygon mirror installed therein according to the determined exposure time.

5. An image registration method comprising:
sensing color test patterns to correct image alignment;
detecting alignment errors of the color test patterns in response to a sensing result;
determining an exposure time required to form an electrostatic latent image in response to the detected alignment error of each of the color test patterns; and
forming the electrostatic latent image according to the determined exposure times.

6. The image registration method according to claim 5, wherein the determining of said exposure time further comprises:
determining the time required to form the electrostatic latent image of a line as the exposure time.

7. The image registration method according to claim 5 or 6, wherein the determining of said exposure time further comprises:
determining the exposure time based on an error slope corresponding to an image alignment error of each of the color test patterns.

8. The image registration method according to claim 5, 6 or 7, wherein the forming of the electrostatic latent image further comprises:
forming the electrostatic latent image while changing the rotational speed of a polygon mirror according to the determined exposure time.

9. A computer-readable medium comprising a computer readable instructions recorded thereon, which when executed on a computer are operable to perform the method of any one of claims 5-8.
